(19) Europäisches Patentamt
European Patent Office
Office européen des brevets

(11) EP 1 299 493 B1

(12) **EUROPÄISCHE PATENTSCHRIFT**

(45) Veröffentlichungstag und Bekanntmachung des Hinweises auf die Patenterteilung:
**07.09.2005 Patentblatt 2005/36**

(21) Anmeldenummer: **01947365.1**

(22) Anmeldetag: **13.06.2001**

(51) Int Cl.[7]: **C09J 133/00**, C09J 7/00

(86) Internationale Anmeldenummer:
**PCT/EP2001/006682**

(87) Internationale Veröffentlichungsnummer:
**WO 2002/002709 (10.01.2002 Gazette 2002/02)**

(54) **ORIENTIERTE ACRYLATHOTMELTS**
ORIENTED ACRYLIC HOTMELTS
ADHESIFS THERMOFUSIBLES ACRYLIQUES ORIENTES

(84) Benannte Vertragsstaaten:
**DE ES FR GB IT**

(30) Priorität: **30.06.2000 DE 10031868**
**13.07.2000 DE 10034069**

(43) Veröffentlichungstag der Anmeldung:
**09.04.2003 Patentblatt 2003/15**

(73) Patentinhaber: **tesa AG**
**20253 Hamburg (DE)**

(72) Erfinder:
- **BARGMANN, Renke**
**22527 Hamburg (DE)**
- **HUSEMANN, Marc**
**22605 Hamburg (DE)**
- **ZÖLLNER, Stephan**
**22043 Hamburg (DE)**

(56) Entgegenhaltungen:
**US-A- 5 866 249**

- **YU T-H ET AL: "Orientation determination and morphological study of high density polyethylene (HDPE) extruded tubular films: effect of processing variables and molecular weight distribution" POLYMER, ELSEVIER SCIENCE PUBLISHERS B.V, GB, Bd. 37, Nr. 21, Oktober 1996 (1996-10), Seiten 4675-4687, XP004175818 ISSN: 0032-3861**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft orientierte Polyacrylathaftklebemassen mit anisotropen Eigenschaften.

Durch immer größere Umweltauflagen und Kostendruck besteht zur Zeit der Trend zur Herstellung von Haftklebemassen ohne, oder nur mit geringen Mengen an Lösemittel. Dieses Ziel kann am einfachsten durch die Heißschmelz-Technologie (Hotmelt-Technologie) verwirklicht werden. Ein weiterer Vorteil ist die Produktionszeitverkürzung. Hotmelt-Anlagen können Klebemassen bedeutend schneller auf Träger oder Trennpapier laminieren und so Zeit und Geld einsparen.
Die Hotmelt-Technologie stellt aber immer höhere Anforderungen an die Klebemassen. Für hochwertige industrielle Anwendungen werden insbesondere Polyacrylate bevorzugt, da diese transparent und witterungsstabil sind.
Zur Herstellung von Acrylathotmelts werden konventionell Acrylatmonomere in Lösung polymerisiert und anschließend das Lösemittel in einem Aufkonzentrationsprozeß im Extruder entfernt.
Neben den Vorteilen in der Transparenz und der Witterungsstabilität müssen Acrylathaftklebemassen aber auch hohen Anforderungen im Bereich Scherfestigkeit gerecht werden. Dies wird durch Polyacrylate mit hohem Molekulargewicht, hoher Polarität und anschließender effizienter Vernetzung erreicht.

Für die Eigenschaften von Haftklebemassen spielt auch die Orientierung der Makromoleküle eine bedeutende Rolle. Während der Herstellung, der Weiterverarbeitung oder der späteren (mechanischen) Beanspruchung von Polymeren bzw. Polymermassen kann es zu hohen Orientierungsgraden der Makromoleküle in bevorzugte Richtungen im gesamten Polymerverband kommen. Durch die Orientierung kann es zu besonderen Eigenschaften der entsprechenden Polymere kommen. Einige Beispiele für durch den Orientierungsgrad beeinflußbare Eigenschaften sind Festigkeit bzw. Steifigkeit der Polymere bzw. der daraus hergestellten Kunststoffe, thermische Leitfähigkeit, thermische Stabilität sowie anisotropes Verhalten bezüglich der Durchlässigkeit für Gase und Flüssigkeiten.
Eine wesentliche von der Orientierung der Bausteine abhängende Eigenschaft ist die Brechung des Lichtes (ausgedrückt durch den entsprechenden Brechungsindex n) bzw. die Verzögerung $\delta$.

Von der verfahrenstechnischen Seite bietet die Elektronenstrahlvernetzung Vorteile. So können beispielsweise durch die Vernetzung bestimmte Zustände "eingefroren" werden.

Die Erhaltung der partiellen Orientierung in teil-kristallinen Kautschuk-Klebemassen wurde bereits in der US 5,866,249 beschrieben. Durch die anisotropen Klebeigenschaften konnten innovative Haftklebeanwendungen definiert werden.

Aufgabe der Erfindung ist es, orientierte Polyacrylatmassen zur Verfügung zu stellen, welche eine hinreichende Lebensdauer des anisotropen Zustands besitzen und welche durch ihre Orientierung günstige Eigenschaften bezüglich ihrer Verwendung als Haftklebemasse besitzen, insbesondere bezüglich ihrer Klebeeigenschaften. Aufgabe ist es weiterhin, ein Verfahren zur Herstellung solcher Haftklebemassen anzubieten.

Gelöst wird die Aufgabe überraschend und für den Fachmann in nicht vorhersehbarer Weise durch die Haftklebemasse, wie sie im Hauptanspruch dargestellt ist Die Unteransprüche betreffen bevorzugte Weiterentwicklungen dieser Haftklebemasse. Weiterhin wird ein Verfahren zur Herstellung derartiger Haftklebemassen sowie eine Verwendung hierfür beansprucht.

Der Hauptanspruch betrifft dementsprechend eine Haftklebemasse, welche durch radikalische Polymerisation erhältlich ist, wobei

- **o** die Haftklebemasse zu mindestens 65 Gew.-% auf zumindest einem acrylischen Monomer aus der Gruppe der Verbindungen der folgendän allgemeinen Formel basiert:

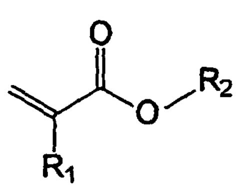

  wobei $R_1$ = H oder $CH_3$ ist und der Rest $R_2$ = H oder $CH_3$ ist oder gewählt wird aus der Gruppe der verzweigten oder unverzweigten, gesättigten Alkylgruppen mit 2 - 20 Kohlenstoffatomen.

- das mittlere Molekulargewicht der Haftklebemasse mindestens 650.000 beträgt,
- die auf einen Träger aufgetragene Haftklebemasse eine Vorzugsrichtung besitzt, wobei der in Vorzugsrichtung gemessene Brechungsindex $n_{MD}$ größer ist als der in einer Richtung senkrecht zur Vorzugsrichtung gemessene Brechungsindex $n_{CD}$, und wobei die Differenz $\Delta n = n_{MD} - n_{CD}$ mindestens $1 \cdot 10^{-5}$ beträgt,

In einer besonders vorteilhaften Ausführungsform der erfinderischen Haftklebemassen ist der Rest $R_2$ gewählt aus der Gruppe der verzweigten oder unverzweigten, gesättigten Alkylgruppen mit 4 - 9 Kohlenstoffatomen.

Als nicht ausschließliche Beispiele für Alkylgruppe, welche für den Rest $R_2$ in bevorzugter Weise Anwendung finden können, seien im folgenden genannt Butyl-, Pentyl-, Hexyl-, Heptyl-, Octyl-, Isooctyl-, 2-Methylheptyl-, 2-Ethylhexyl-, Nonyl-, Decyl-, Dodecyl-, Lauryl-, oder Stearyl(meth)acrylat oder (Meth)acrylsäure.

In einer weiteren sehr günstigen Ausführungsform der erfinderischen Haftklebemasse werden als Monomere Vinylverbindungen, welche funktionelle Gruppen enthalten, mit einem Anteil von 0 - 35 Gewichtsprozent eingesetzt. In diesem Sinne fallen auch Acrylverbindungen mit funktionellen Gruppen unter die Bezeichnung "Vinyiverbindung". Solche funktionelle Gruppen enthaltenden Vinylverbindungen sind Maleinsäureanhydrid, Styrol, Siyrol-Verbindungen, Vinylacetat, (Meth)acrylamide, N-substituierte (Meth)acrylamide, β-Acryloyloxypropionsäure, Vinylessigsäure, Fumarsäure, Crotonsäure, Aconitsäure, Dimethylacrylsäure, Trichloracrylsäure, Itaconsäure, Vinylacetat, Hydroxyalkyl(meth)acrylat, aminogruppenhaltige (Meth)acrylate, hydroxygruppenhaltige (Meth)acrylate, besonders bevorzugt 2-Hydroxyethyl(meth)acrylat, 2-Hydroxypropyl-(meth)acrylat, und/oder 4-Hydroxybutyl(meth)acrylat und mit Doppelbindung funktionalisierte Fotoinitiatoren; die vorstehende Aufzählung ist nur beispielhaft und nicht abschließend.

Weiterhin wird ein Verfahren zur Herstellung orientierter Acrylathaftklebemassen beansprucht, welches insbesondere hervorragend geeignet ist, die erfinderischen Haftklebemassen herzustellen. Dieses Verfahren zeichnet sich durch die folgenden Schritte aus:

- Polymerisation eines Gemisches enthaltend zumindest ein Monomer auf Vinyl-, Acryl- oder Methacrylbasis oder eine Kombination dieser Monomere, wobei das mittlere Molekulargewicht der entstehenden Polymere oberhalb von 650.000 liegt,
- anschließender Extrusionsbeschichtung der Polymermasse ,
- anschließender Vernetzung der Polymermasse auf dem Träger durch Bestrahlung mit Elektronenstrahlen.

Die Extrusionsbeschichtung erfolgt dabei bevorzugt durch eine Extrusionsdüse. Die verwendeten Extrusionsdüsen können aus einer der drei folgenden Kategorien stammen: T-Düse, Fischschwanz-Düse und Bügel-Düse. Die einzelnen Typen unterscheiden sich durch die Gestalt ihres Fließkanals. Zur Herstellung von orientierten Acrylatahftklebemassen wird besonders bevorzugt mit einer Bügeldüse auf einen Träger beschichtet, und zwar derart, daß durch eine Relativbewegung von Düse zu Träger eine Polymerschicht auf dem Träger entsteht.

Die Zeitdauer zwischen der Beschichtung und der Vernetzung ist in günstiger Weise sehr gering, bevorzugt nicht größer als 10 s.

Durch die Ausformung des Acrylathotmelts in der Bügel-Düse sowie den Austritt aus der Düse mit einer bestimmten Filmdicke, durch die Reckung des Haftklebemassenfilms beim Übertrag auf das Trägermaterial auf eine dünnere Filmdicke und durch die anschließende Inline-Vemetzung wird die Orientierung erhalten.

Für die Erfindung ist es besonders vorteilhaft, wenn die Zusammensetzung der entsprechenden Monomere derart gewählt wird, daß die resultierenden Klebemassen entsprechend D. Satas [Handbook of Pressure Sensitive Adhesive Technology, 1989, Verlag VAN NOSTRAND REINHOLD, New York] haftklebende Eigenschaften besitzen. Hierfür sollte die Glasübergangstemperatur der Acrylathaftklebemasse unterhalb 25 °C liegen.

Die freie radikalische Polymerisation kann in Gegenwart eines organischen Lösungsmittels oder in Gegenwart von Wasser oder in Gemischen aus organischen Lösungsmitteln und Wasser oder in Substanz durchgeführt werden. Bevorzugt wird so wenig Lösungsmittel wie möglich eingesetzt. Die Polymerisationszeit beträgt - je nach Umsatz und Temperatur - zwischen 6 und 48 h.

Bei der Lösungsmittelpolymerisation werden als Lösemittel vorzugsweise Ester gesättigter Carbonsäuren (wie Ethylacetat), aliphatische Kohlenwasserstoffe (wie n-Hexan oder n-Heptan), Ketone (wie Aceton oder Methylethylketon), Siedegrenzbenzin oder Gemische dieser Lösungsmittel verwendet. Für die Polymerisation in wäßrigen Medien bzw. Gemischen aus organischen und wäßrigen Lösungsmitteln werden zur Polymerisation bevorzugt die dem Fachmann zu diesem Zwecke bekannten Emulgatoren und Stabilisatoren zugesetzt. Als Polymerisationsinitiatoren werden übliche radikalbildende Verbindungen wie beispielsweise Peroxide, Azoverbindungen und Peroxosulfate eingesetzt. Auch Initiatorgemische können verwendet werden. Bei der Polymerisation können weitere Regler zur Molekulargewichtssenkung und Verringerung der Polydispersität eingesetzt werden. Als sogenannte Polymerisationsregler können beispielsweise Alkohole und Ether verwendet werden. Das Molekulargewicht der Acrylathaftklebemassen liegt vorteilhaft zwischen 650.000 und 2.000.000 g/mol, mehr bevorzugt zwischen 700.000 und 1.000.000 g/mol.

In einer bevorzugten Vorgehensweise wird die Polymerisation in Polymerisationsreaktoren durchgeführt, die im allgemeinen mit einem Rührer, mehreren Zulaufgefäßen, Rückflußkühler, Heizung und Kühlung versehen sind und für das Arbeiten unter $N_2$-Atmosphäre und Überdruck ausgerüstet sind.

Nach der Polymerisation in Lösemittel kann das Polymerisationsmedium unter vermindertem Druck entfernt werden, wobei dieser Vorgang bei erhöhten Temperaturen, beispielsweise im Bereich von 80 bis 150 °C durchgeführt wird. Die Polymere können dann in lösemittelfreiem Zustand, insbesondere als Schmelzhaftkleber, eingesetzt werden.

In manchen Fällen ist es auch von Vorteil, die erfindungsgemäßen Polymere in Substanz herzustellen.

Zur Herstellung der Acrylathaftklebemassen können die Polymere in üblicher Weise modifiziert werden. Beispielsweise können klebrigmachende Harze, wie Terpen-, Terpenphenol-, C5-, C9-, C5/C9- Kohlenwasserstoff-, Pinen-, Inden- oder Kolophoniumharze auch in Kombination miteinander zugesetzt werden. Weiterhin können auch Weichmacher, verschiedene Füllstoffe (z.B. Fasern, Ruß, Zinkoxid, Titandioxid, Mikrovollkugeln, Voll- oder Hohlglaskugeln, Kieselsäure, Silikaten, Kreide, blockierungsfreie Isocyanate etc.), Alterungsschutzmittel, Lichtschutzmittel, Ozonschutzmittel, Fettsäuren, Weichmacher, Keimbildner, Blähmittel und/oder Beschleuniger als Zusätze verwendet werden. Zusätzlich können Vernetzer und Promotoren zur Vernetzung beigemischt werden. Geeignete Vernetzer für die Elektronenstrahlvemetzung sind beispielsweise bi- oder multifunktionelle Acrylate, bi- oder multifunktionelle Isocyanate oder bi- oder multifunktionelle Epoxide.

Die reinen oder abgemischten Acrylathotmelts werden durch eine Düse mit variabler Schlitzbreite auf einen Träger beschichtet und anschließend auf dem Träger mit Elektronenstrahlen gehärtet. Als Trägermaterial sind prinzipiell BOPP, PET, Vlies, PVC, Schaum oder Trennpapiere (Glassine, HDPE, LDPE) geeignet. Die Vernetzung erfolgt im Inline-Betrieb unmittelbar nach dem Auftragen der Haftklebemasse auf den Träger.

Die Messung der Orientierung der Klebemasse kann mit einem Polarimeter, mit Infrarot-Dichroismus oder mit Röntgenstreuung erfolgen. Die Messungen zeigten, daß die Orientierung in Acrylathaftklebemassen im unvemetzten Zustand lediglich einige Tage erhalten bleibt Das System relaxiert in der Ruhe- oder Lagerungszeit und verliert seine Vorzugsrichtung. Durch die sofortige Elektronenstrahl-Vemetzung nach der Beschichtung durch die Düse kann dieser Effekt bedeutend verstärkt werden. Die Relaxierung der orientierten Polymerketten konvergiert gegen null, und die orientierten Haftklebemassen können ohne Verlust ihrer Vorzugsrichtung über einen sehr großen Zeitraum gelagert werden. Die Ausprägung der Orientierung innerhalb der Acrylathaftklebemassen ist sowohl von der Düsen- und Beschichtungstemperatur als auch von der Temperatur des Trägermaterials abhängig. Die besten Orientierungs-Effekte werden durch das Ablegen auf einer kalten Oberfläche erzielt. Daher sollte das Trägermaterial durch eine Walze während der Beschichtung direkt gekühlt werden. Die Kühlung der Walze kann durch einen Flüssigkeitsfilm von außen oder von innen oder durch ein kühlendes Gas erfolgen. Weiterhin sollte zur Erzielung eines hohen Orientierungsgrades die Beschichtungs- und Düsentemperatur herabgesetzt werden. Der Grad der Orientierung ist durch die Düsenspaltbreite frei einstellbar. Je dicker der Haftklebemassenfilm ist, der aus der Extrusionsdüse herausgedrückt wird, desto stärker kann die Klebemasse auf einen dünneren Haftklebemassenfilm auf dem Trägermaterial gereckt werden. Dieser Reckungsvorgang kann neben der frei einstellbaren Düsenbreite auch durch die Bahngeschwindigkeit des abnehmenden Trägermaterials frei eingestellt werden. Durch den Beschichtungsvorgang wird die Klebemasse orientiert.

Die Anisotropie kann auch nachträglich durch Streckung einer Acrylathaftklebemasse auf einem dehnbaren Träger erzeugt werden.

***Experimeirte***

Das erfindungsgemäße Verfahren wird im folgenden durch Experimente beschrieben.

Folgende Testmethoden wurden angewendet, um die klebtechnischen Eigenschaften der hergestellten Haftklebemassen zu evaluieren.

Testmethoden

180° Klebkrafttest (Test A)

Ein 20 mm breiter Streifen einer auf einer Polyester oder silikonisiertem Trennpapier gecoateten Acrylathaftklebemasse wurde auf Stahlplatten aufgebracht. Es wurde - je nach Richtung und Reckung - Längs oder Quermuster auf der Stahlplatte verklebt Der Haftklebestreifen wurde zweimal mit einem 2 kg Gewicht auf das Substrat aufgedrückt. Das Klebeband wurde anschließend sofort mit 30 mm/min und im 180° Winkel vom Substrat abgezogen. Die Stahlplatten wurden zweimal mit Aceton und einmal mit Isopropanol gewaschen. Die Messergebnisse sind in N/cm angegeben und sind gemittelt aus drei Messungen. Alle Messungen wurden bei Raumtemperatur unter klimatisierten Bedingungen durchgeführt.

Messung der Doppelbrechung (Test B)

Version 1

Ein Spektralphotometer Modell Uvikon 910 wurde im Probenstrahl mit zwei gekreuzten Polaroidfiltem versehen. Orientierte Acrylate wurden zwischen zwei Objekträgem fixiert. Die Schichtdicke der orientierten Probe wurde aus Vorversuchen mittels Dickentaster ermittelt. Die derart vorbereitete Probe wurde im Meßstrahl des Spektralphotometers derart plaziert, daß ihre Orientierungsrichtung um jeweils 45° von den optischen Achsen der beiden Polaroidfilter abwich. Mittels einer zeitaufgelösten Messung wurde dann die Transmission T über die Zeit verfolgt Aus den Transmissionsdaten wurde dann die Doppelbrechung gemäß folgender Beziehung ermittelt:

$$T = sin^2(\pi \times R) ,$$

wobei R = Retardation.

Die Retardation R setzt sich wie folgt zusammen:

$$R = \frac{d}{\lambda} \Delta n,$$

wobei d = Probendicke

Die Transmission setzt sich weiterhin aus $T = \frac{I_t}{I_0}$ zusammen. Somit ergibt sich letztendlich für die Doppelbrechung

$$\Delta n = \frac{\lambda}{\pi d} \arcsin \sqrt{T}.$$

Version 2

Die Messung der Doppelbrechung erfolgte mit einem Versuchsaufbau, wie er analog in der Encyclopedia of Polymer Science, John Wiley & Sons, Vol. 10, S. 505, 1987 als Circular-Polariskop beschrieben ist. Das ausgesendete Licht eines diodengepumpten Festkörperlasers mit der Wellenlänge λ = 532 nm wird zunächst durch ein Polaroidfilter linear polarisiert und dann unter Verwendung einer λ/4-Platte mit λ = 532 nm zirkular polarisiert. Dieser derart polarisierte Laserstrahl wird sodann durch die orientierte Acrylatmasse geführt. Da Acrylatmassen hochtransparent sind, kann der Laserstrahl die Masse praktisch ungehindert passieren. Sind die Polymermoleküle der Acrylatmasse orientieri, so hat dies eine Änderung der Polarisierbarkeit der Acrylatmasse je nach Beobachtungswinkel zur Folge (Doppelbrechung). Der E-Vektor des zirkular polarisierten Laserstrahles erfährt durch diesen Effekt eine Drehung um die Fortschreitungsachse des Laserstrahles. Nach Verlassen der Probe wird der derart manipulierte Laserstrahl durch eine zweite λ/4-Platte mit λ = 532 nm geführt, deren optische Achse um 90° von der optischen Achse der ersten λ/4-Platte abweicht Nach diesem Filter schließt sich ein zweiter Polaroidfilter an, der ebenfalls um 90° vom ersten Polaroidfilter abweicht. Schließlich wird die Intensität des Laserstrahles mit einem Photosensor vermessen und Δn wie unter Version 1 beschrieben bestimmt.

Bestimmung des Gelanteils (Test C)

Die sorgfältig getrockneten lösungsmittelfreien Klebstoffproben werden in ein Vliestütchen aus Polyethylen (Tyvek-Vlies) eingeschweißt. Aus der Differenz der Probengewichte vor der Extraktion und nach der Extraktion durch Toluol wird der Gelwert bestimmt.

Messung des Zug-/Dehnungsyerhalten (Test D)

Streifen der Muster mit einer Breite von mindestens 30 mm und einer Länge von 50 mm wurden zu einem Probenkörper laminiert, um mindestens eine Dicke von 0,5 mm zu erreichen. Eventuelle Lufteinschlüsse sind dabei weitestgehend vermieden worden. Das erhaltene Laminat wurde auf eine Breite von exakt 20 mm geschnitten und die Streifenenden mit Papier verklebt Die Länge des Probenstücks zwischen den Papierstreifenenden betrug dabei genau 25 cm. Die Dicke des Streifens wurde anschließend mittels eines Dickentasters auf 10 µm genau ermittelt.

Der so erhaltene Probenkörper wurde dann unter Zuhilfenahme einer Universalprüfmaschine (Fa. Frank) einer Zug-/Dehnungsmessung unterworfen. Die ermittelten Kräfte wurden jeweils auf den Ausgangsquerschnitt als Spannung angegeben. Die relativen Dehnungen beziehen sich auf die Ausgangslänge von 25 mm. Als Prüfgeschwindigkeiten wurden 100, 300 und 600 mm/min eingestellt.

Messung des Rückschrumpfes (Test E)

Parallel zur Beschichtungsrichtung des Hotmelts wurden Streifen von min. 30 mm Breite und 20 cm Länge geschnitten. Bei Masseauftragen von 130 g/m$^2$ wurden je 3 Streifen, bei 50 g/m$^2$ 8 Streifen übereinander laminiert,

um vergleichbare Schichtdicken zu erhalten. Der derart erhaltene Körper wurde dann auf exakt 20 m Breite geschnitten und an den jeweiligen Enden in einem Abstand von 15 cm mit Papierstreifen überklebt. Der auf diese Weise präparierte Prüfkörper wurde dann bei RT vertikal aufgehängt und die Änderung der Länge über die Zeit verfolgt, bis keine weitere Schrumpfung der Probe mehr festgestellt werden konnte. Die um den Endwert reduzierte Ausgangslänge wurde dann bezogen auf die Ausganglänge als Rückschrumpf in Prozent angegeben.
Für die Messung der Orientierung nach längerer Zeit wurden die beschichteten und orientierten Haftklebemassen über einen längeren Zeitraum als Lappenmuster gelagert und anschließend analysiert.

Herstellung der Proben

Beispiel 1

Ein für radikalische Polymerisationen konventioneller 200 L-Reaktor wurde mit 2500 g Acrylsäure, 47,5 kg 2-Ethylhexylacrylat, und 30 kg Aceton/Isopropanol (97:3) befüllt. Nach 45 Minuten Durchleiten mit Stickstoffgas unter Rühren wurde der Reaktor auf 58 °C hochgeheizt und 20 g 2,2'-Azoisobuttersäurenitril (AIBN) hinzugegeben. Anschließend wurde das äußere Heizbad auf 75 °C erwärmt und die Reaktion konstant bei dieser Außentemperatur durchgeführt Nach 1 h Reaktionszeit wurde wiederum 20 g AIBN hinzugegeben. Nach 5 h und 10 h wurde mit jeweils 15 kg Aceton/Isopropanol (97:3) verdünnt Die Reaktion wurde nach 48 h Reaktionszeit abgebrochen und auf Raumtemperatur abgekühlt. Zur Beschichtung aus Lösung auf einen mit Vorstrich versehenen Polyesterträger wurde mit einem Streichbalken auf 130 g/m$^2$ ausgestrichen, für 10 Minuten bei 120 °C im Trockenschrank getrocknet, mit silikonisiertem Trennpapier abgedeckt und letztendlich mit Elektronenstrahlen einer Dosis von 40 kGy und einer Beschleunigungsspannung von 230 kV bestrahlt. Zur Analyse wurden die Testmethoden A, B und C durchgeführt.
Für die Hotmeltbeschichtungen wurde das Lösungsmittel in einem Aufkonzentrationsextruder entfernt.

Beispiel 2

Die Herstellung erfolgte analog Beispiel 1. Zur Polymerisation wurden 5000 g Acrylsäure, 45 kg 2-Ethylhexylacrylat und 30 kg Aceton/Isopropanol (97:3) eingesetzt. Im weiteren Verlauf wurden die identischen Lösungsmittel- und Initiatormengen verwendet. Die Muster wurden mit Elektronenstrahlen einer Dosis von 30 kGy bestrahlt Zur Analyse wurden die Testmethoden A, B und C durchgeführt.

Beispiel 3

Die Herstellung erfolgte analog Beispiel 1. Zur Polymerisation wurden 3500 g Acrylsäure, 36,5 kg 2-Ethylhexylacrylat, 10 kg Methylacrylat und 30 kg Aceton/Isopropanol (97:3) eingesetzt. Im weiteren Verlauf wurden die identischen Lösungsmittel- und Initiatormengen verwendet Die Muster wurden mit Elektronenstrahlen einer Dosis von 30 kGy bestrahlt Zur Analyse wurden die Testmethoden A, B und C durchgeführt.

Beispiel 4

Die Herstellung erfolgte analog Beispiel 1. Zur Polymerisation wurden 3000 g Acrylsäure, 35,5 kg 2-Ethylhexylacrylat, 7,5 kg Methylacrylat, 4 kg N-tert.-Butytacrytamid und 30 kg Acetonllsopropanol (97:3) eingesetzt. Im weiteren Verlauf wurden die identischen Lösungsmittel- und Initiatormengen verwendet. Die Muster wurden mit Elektronenstrahlen einer Dosis von 30 kGy bestrahlt. Zur Analyse wurden die Testmethoden A, B und C durchgeführt.

Beispiel 5

Die Herstellung erfolgte analog Beispiel 1. Zur Polymerisation wurden 3500 g Acrylsäure, 20,75 kg 2-Ethylhexylacrylat, 20,75 kg Butylacrylat, 5 kg Methylacrylat, und 30 kg Aceton/Isopropanol (97:3) eingesetzt. Im weiteren Verlauf wurden die identischen Lösungsmittel- und Initiatormengen verwendet. Die Muster wurden mit Elektronenstrahlen einer Dosis von 50 kGy bestrahlt Zur Analyse wurden die Testmethoden A, B und C durchgeführt

Beispiel 6 (Reckung der Acrylathotmelts, Muster A - L)

Zur Erzeugung der Muster A - L wurde Beispiel 4 im Trocknungsextruder aufkonzentriert und durch eine Düse mit 300 µm (Muster A - F) und 780 µm Spaltbreite (G - L) auf einen silikonisierten Trennpapierträger mit 130 g/m$^2$ beschichtet
Die Bahngeschwindigkeit des Trägers betrug 80 m/min. Für die Muster A - C sowie G - 1 wurde der Trennpapierträger

mit dem Haftklebefilm über eine Kühlwalze mit 25 °C geführt. Bei den Mustern D - F sowie J - L wurde diese Walze auf 90 °C hochgeheizt. Zur Untersuchung des Relaxationsverhaltens wurden die Muster A, D, G und J sofort nach der Beschichtung im Inline-Prozess mit Elektronenstrahlen einer Dosis von 30 kGy und einer Beschleunigungsspannung von 230 kV ESH vernetzt. Die Muster B, E, H, und K wurden nach der Beschichtung für eine Stunde bei Raumtemperatur gelagert und anschließend mit identischen Verfahrensparametern elektronenstrahlvernetzt. Die Muster C, F, I, und L wurden nach der Beschichtung für 48 Stunden bei Raumtemperatur gelagert und anschließend mit identischen Verfahrensparametem elektronenstrahlvernetzt. Zur Analyse wurden von allen Mustern die Testmethoden A, B und C durchgeführt.

Beispiel 7 (Muster 1#)

Es wurde analog Beispiel 6 vorgegangen. Als Haftklebemasse wurde Beispiel 1 eingesetzt. Die Beschichtung erfolgt durch eine 300 µm breite Düse mit 130 g/m² Masseauftrag, einer Chillrolltemperatur von 25°C (Außentemperatur der Stahlwalze, auf der das Trägermaterial beschichtet wird) der und einer Bahngeschwindigkeit von 80 m/min. Es wurde mit Elektronenstrahlen einer Dosis von 40 kGy vemetzt und zur Analyse die Testmethoden A, B, C, D und E durchgeführt.

Beispiel 8 (Muster 2#)

Es wurde analog Beispiel 6 vorgegangen. Als Haftklebemasse wurde Beispiel 2 eingesetzt. Die Beschichtung erfolgt durch eine 300 µm breite Düse mit 130 g/m² Masseauftrag, einer Chillrolltemperatur von 25 °C und einer Bahngeschwindigkeit von 80 m/min. Es wurde mit Elektronenstrahlen einer Dosis von 30 kGy vemetzt und zur Analyse die Testmethoden A, B, C, D und E durchgeführt.

Beispiel 9 (Muster 3#)

Es wurde analog Beispiel 6 vorgegangen. Als Haftklebemasse wurde Beispiel 3 eingesetzt. Die Beschichtung erfolgt durch eine 300 µm breite Düse mit 130 g/m² Masseauftrag, einer Chillrolltemperatur von 25 °C und einer Bahngeschwindigkeit von 80 m/min. Es wurde mit Elektronenstrahlen einer Dosis von 30 kGy vernetzt und zur Analyse die Testmethoden A, B, C, D und E durchgeführt.

Beispiel 10 (Muster 5#)

Es wurde analog Beispiel 6 vorgegangen. Als Haftklebemasse wurde Beispiel 5 eingesetzt. Die Beschichtung erfolgt durch eine 300 µm breite Düse mit 130 g/m² Masseauftrag, einer Chillrolltemperatur von 25 °C und einer Bahngeschwindigkeit von 80 m/min. Es wurde mit Elektronenstrahlen einer Dosis von 50 kGy vemetzt und zur Analyse die Testmethoden A, B, C, D und E durchgeführt.

Resultate

Zur Untersuchung der Orientierung von Acrylathaftklebemassen und deren Vemetzbarkeit wurden zunächst verschiedene Acrylathaftklebemassen über freie radikalische Polymerisation hergestellt. Alle Klebemassen sind bezüglich Temperaturstabilität und Fließviskosität im Hotmelt-Prozess verarbeitbar. Die dargestellten Acrylathaftklebemassen wurden in Lösung polymerisiert und anschließend im Trocknungsextruder aufkonzentriert Die Comonomerzusammensetzung der einzelnen Klebemassen ist in Tabelle 1 aufgelistet.

Tabelle 1:

| Comonomerzusammensetzung der einzelnen Acrylathaftklebemassen | | | | | |
|---|---|---|---|---|---|
| Tabelle 1 | | | | | |
| Beispiel | 2-EHA | BA | MA | NTBAM | AS |
| 1 | 95 | 0 | 0 | 0 | 5 |
| 2 | 90 | 0 | 0 | 0 | 10 |
| 3 | 73 | 0 | 20 | 0 | 7 |
| 4 | 71 | 0 | 15 | 8 | 6 |

Tabelle 1: (fortgesetzt)

| Comonomerzusammensetzung der einzelnen Acrylathaftklebemassen | | | | | |
|---|---|---|---|---|---|
| Tabelle 1 | | | | | |
| Beispiel | 2-EHA | BA | MA | NTBAM | AS |
| 5 | 41,5 | 41,5 | 10 | 0 | 7 |
| 2-EHA:' 2-Ethylhexylacrylat<br>BA: Butylacrylat<br>MA: Methylacrylat<br>NTBAM: N-tert-Butylacrylamid<br>AS: Acrylsäure | | | | | |

Das mittlere Molekulargewicht der Beispiele 1 - 5 betrug etwa 800.000 g/mol. Als Referenzmuster wurden die Beispiele 1-5 aus Lösung auf eine mit einem Vorstrich (Primer) versehende Polyesterfolie mit 130 g/$m^2$ aufgetragen, bei 120 °C getrocknet, mit Elektronenstrahlung gehärtet und anschließend klebtechnisch ausgeprüft. Zur Beurteilung der Effizienz der Vernetzung wurde der Gelwert der Klebemassen gemessen. Der Gelwert gibt den unlöslichen Anteil der Haftklebemasse in Toluol wider. Ferner wurden die Sofortklebkräfte auf Stahl gemessen. Die Ergebnisse der Ausprüfungen sind in Tabelle 2 dargestellt.

Tabelle 2:

| Klebtechnische Ausprüfung der Referenzmuster | | | |
|---|---|---|---|
| Beispiel | Elektronenstrahl -Dosis [kGy] | Gelwert [%] | KK-Stahl [N/cm] |
| 1 | 40 | 65 | 6,5 |
| 2 | 30 | 55 | 6,0 |
| 3 | 30 | 56 | 5,9 |
| 4 | 30 | 59 | 6,1 |
| 5 | 50 | 72 | 6,5 |
| KK: Klebkraft auf Stahl | | | |

Die Gelwerte variieren - je nach Comonomerzusammensetzung und Dosis zwischen 55 und 72 %.
Durch den relativ hohen Anteil polarer Monomere sind die Klebemassen kohäsiv und besitzen daher relativ geringe Sofortklebkräfte auf Stahl von etwa 6 - 6,5 N/cm. Messungen in Quer- sowie Längsrichtung ergaben im Rahmen der Meßfehler nahezu die identischen Klebkräfte. Die Messung der Doppelbrechung zeigte keine Orientierung innerhalb der Klebemassen. Es wurden keine unterschiedlichen Polarisierbarkeiten in Längs- und Querrichtung festgestellt.
Zur Untersuchung des Orientierungseffektes wurden die Beispiele 1 - 5 im Trocknungsextruder zu 100%-Systemen aufkonzentriert und durch eine Düse mit unterschiedlicher Schlitzbreite beschichtet.

Zur Herstellung orientierter Acrylathoimelts wurde die Haftklebemasse durch den Fließvorgang innerhalb der Düse vororientiert. Anschließend wird der Klebefilm auf das Trägermaterial mit einer bestimmten Schichtdicke übertragen. Zur Einstellung der Schichtdicke ist ein bestimmtes Reckverhältnis zwischen Düsenbreite und Schichtdicke erforderlich. Dieser Effekt kann durch Erhöhung der Beschichtungsgeschwindigkeit (Bahngeschwindigkeit des aufnehmenden Trägermaterials) verstärkt werden. Durch das Verhältnis von Düsenspaltbreite und Schichtdicke der Klebemasse auf dem Trägermaterial kann das Maß der Orientierung der Polymerketten frei variiert werden.
Zur experimentellen Bestätigung wurden die Klebemassen mit unterschiedlichen Reckverhältnissen und weiteren Versuchsparametem beschichtet. Zur Minimierung der Relaxationszeit wurden die Haftklebemasse nach der Beschichtung im Inline-Prozess mit Elektronenstrahlen vemetzt. Die Relaxationszeiten lagen somit deutlich unterhalb 10 s. Ergänzende Versuche haben gezeigt, daß nach 48 h noch Orientierungen nachweisbar sind. Diese Experimente wurden mit Beispiel 4 durchgeführt und das optimale Reckverhältnis, die optimale Temperatur der Beschichtungswalze und der Zeitpunkt der Inline-Vemetzung ermittelt. Die Experimente sind in Tabelle 3 zusammengefaßt.

Tabelle 3:

| Versuchsparameter zur Orientierung der Klebemasse 4 | | | | |
|---|---|---|---|---|
| Muster | Reckverhältnis | Temperatur der Walze [°C] | Zeitpunkt der Vernetzung | $\Delta n$-Werte |
| A | 1:2,3 | 25 | 2 s | $9,3 \cdot 10^{-5}$ |
| B | | | 1 h | $4,2 \cdot 10^{-5}$ |
| C | | | 48 h | $6,6 \cdot 10^{-6}$ |
| D | | 90 | 2 s | $3.4 \cdot 10^{-5}$ |
| E | | | 1 h | $7,8 \cdot 10^{-6}$ |
| F | | | 48 h | - |
| G | 1:6 | 25 | 2 s | $1,0 \cdot 10^{-4}$ |
| H | | | 1 h | $5,6 \cdot 10^{-5}$ |
| I | | | 48 h | $8,3 \cdot 10^{-6}$ |
| J | | 90 | 2 s | $7,4 \cdot 10^{-5}$ |
| K | | | 1 h | $9,7 \cdot 10^{-6}$ |
| L | | | 48 h | - |
| $\Delta n$-Werte: Differenz der Brechungsindizes $n_{MD}$ in Richtung der Verstreckung und $n_{CD}$ senkrecht hierzu. | | | | |

Das Reckverhältnis wurde durch Variation der Düsenbreite eingestellt. Der Masseauftrag blieb konstant bei 130 $g/m^2$. Die Muster wurden jeweils mit einer Elektronenstrahl-Dosis von 30 kGy bestrahlt. Alle gereckten Muster sind alphabetisch aufgelistet.

Die Orientierung innerhalb der Acrylathaftklebemassen wurde durch Quantifizierung der Doppelbrechung bestimmt. Der Brechungsindex n eines Mediums ist gegeben über den Quotienten aus der Lichtgeschwindigkeit $c_0$ im Vakuum und der Lichtgeschwindigkeit c in dem betrachteten Medium ($n = c_0/c$), n ist eine Funktion der Wellenlänge des jeweiligen Lichts. Als Maß für die Orientierung der Haftklebemasse dient die Differenz $\Delta n$ des in eine Vorzugsrichtung (Verstreckungsrichtung, machine direction MD) gemessenen Brechungsindex $n_{MD}$ und des in einer Richtung senkrecht zur Vorzugsrichtung (cross direction CD) gemessenen Brechungsindex $n_{CD}$, also $\Delta n = n_{MD} - n_{CD}$, dieser Wert ist durch die in Test B beschriebenen Messungen zugänglich.

Alle Muster zeigten eine Orientierung der Polymerketten. Die ermittelten $\Delta n$-Werte sind in Tabelle 3 aufgelistet, wobei die größte Orientierung für das Muster G gemessen wurde ($\Delta n = 1,0 \cdot 10^{-4}$). Für das weniger stark gereckte Muster A wurde ein $\Delta n$-Wert von $9,3 \cdot 10^{-5}$ bestimmt.

Der entsprechende An-Wert ist abhängig von der Comonomerzusammensetzung und dem Verzweigungsgrad des Polymers. Für die hier dargestellten Polymere ist die Haftklebemasse erfindungsgemäß orientiert, wenn der $\Delta n$-Wert $> 1 \cdot 10^{-5}$ beträgt.

Die Orientierung innerhalb der Acrylathaftklebemassen in dem oben angegebenen Grad konnte somit durch die Doppelbrechungsmessung für die vermessenen Proben nachgewiesen werden.

Die Auswirkungen auf die klebtechnischen Eigenschaften sind in Tabelle 4 dargestellt:

Tabelle 4

| Muster | Gelwert [%] | KK-Stahl MD [N/cm] | KK-Stahl CD [N/cm] |
|---|---|---|---|
| A | 61 | 5,2 | 6,7 |
| B | 59 | 5,8 | 6,4 |
| C | 59 | 6,1 | 6,2 |
| D | 59 | 6,3 | 6,6 |
| E | 60 | 6,0 | 6,4 |
| F | 56 | 6,1 | 6,0 |
| G | 63 | 4,9 | 6,9 |

Tabelle 4 (fortgesetzt)

| Muster | Gelwert [%] | KK-Stahl MD [N/cm] | KK-Stahl CD [N/cm] |
|---|---|---|---|
| H | 62 | 5,9 | 6,5 |
| I | 60 | 6,0 | 6,1 |
| J | 62 | 5,8 | 6,7 |
| K | 59 | 5,9 | 6,4 |
| L | 58 | 6,0 | 6,0 |
| Masseauftrag 130 g/m$^2$<br>KK: Klebkraft auf Stahl;<br>MD (maschine direction; Verstreckungsrichtung); CD (cross direction, Querrichtung) | | | |

Für die Muster A und G wurden bezugnehmend auf die Klebkräfte für MD (maschine direction; Verstreckungsrichtung (Längsrichtung, in der die Haftklebemasse gereckt wurde)) und für CD (cross direction, Querrichtung, senkrecht auf MD) nur relativ geringe Unterschiede in der Klebkraft gemessen, wobei für MD jeweils die niedrigen Werte gemessen wurden. Auch die Gelwerte nach der Elektronenstrahl-Vernetzung schwanken relativ wenig mit dem Grad der Orientierung. Die stärksten Orientierungen wurden mit kurzer Relaxationszeit und kalter Beschichtungsrolle erzielt

Um die universelle Übertragbarkeit zu gewährleisten, wurden weitere Acrylathotmelts mit unterschiedlichen Comonomerzusammensetzungen aus der Schmelze beschichtet

Die Ergebnisse der klebtechnischen Ausprüfung sind in Tabelle 5 dargestellt

Tabelle 5

| Muster | Elektronenstrahl-Dosis [kGy] | Gelwert [%] | KK-Stahl MD [N/cm] | KK-Stahl CD [N/cm] | $\Delta$n-Werte |
|---|---|---|---|---|---|
| 1# | 40 | 72 | 5,8 | 6,8 | $1{,}5 \cdot 10^{-4}$ |
| 2# | 30 | 62 | 5,7 | 6,4 | $0{,}8 \cdot 10^{-4}$ |
| 3# | 30 | 61 | 5,5 | 6,2 | $1{,}2 \cdot 10^{-4}$ |
| 5# | 50 | 75 | 5,9 | 6,7 | $0{,}6 \cdot 10^{-4}$ |
| Masseauftrag 130 g/m$^2$<br>KK: Klebkraft auf Stahl;<br>MD (maschine direction; Verstreckungsrichtung); CD (cross direction, Querrichtung)<br>$\Delta$n-Werte: Differenz der Brechungsindizes $n_{MD}$ in Verstreckungsrichtung und $n_{CD}$ senkrecht hierzu. | | | | | |

Die Ausprüfungen der gereckten Muster zeigen, daß generell Acrylathaftklebemassen mit anisotropen Klebeeigenschaften erzeugt werden können, indem die Haftklebemasse in einer Extrusionsdüse ausgeformt wird, bei der Beschichtung stark gereckt wird und dieser Zustand anschließend mit Elektronenbestrahlung "eingefroren" wird. Die für Muster 1#, 2#, 3#, 5# ermittelten $\Delta$n -Werte liegen in etwa auf dem Niveaü desjenigen von Muster G. Für die Muster 1#, 2#, 3# und 5# wurden nur relativ geringe Unterschiede in den Klebkräften für Längs- und Querrichtung gemessen. Wiederum werden in Verstreckungsrichtung (MD) niedrigere Klebkräfte gemessen.

Dagegen zeigen Zug/Dehnmessungen einen deutlichen Einfluß der Orientierung auf die physikalischen Eigenschaften der Haftklebemassen. In Abbildung 1 sind die Zug/Dehn-Diagramme der Muster 1#, 2#, 3# und 5# dargestellt.

Die Muster 1#, 2#, 3# und 5# zeigen nach der Orientierung in Verstreckungsrichtung (MD) eine bedeutend geringere Dehnung. Die Spannung steigt bereits auf einer sehr kurzen Strecke schnell an und die Muster reißen. In der Querrichtung (CD) lassen sich Beispiele mit weit über 1000 % Dehnung weiter strecken und sind in dieser Richtung bedeutend weniger reißfest.

Für die klebtechnische Anwendung dieser orientierten Haftklebemassen ist der Rückschrumpf ein entscheidender Faktor. Orientierte Klebemassen besitzen die Tendenz, sich nach der Streckung in eine vorgegebene Richtung durch das ‚Entropieelastische Verhalten' in den Ausgangszustand zurückzubewegen. Zur analytischen Fassung dieser Problematik wurde der Rückschrumpf der orientierten Muster bestimmt.

Die bei Raumtemperatur ermittelten Werte sind in Tabelle 6 aufgelistet:

Tabelle 6

| Muster | Rückschrumpf [%] |
|---|---|
| 1# | 91 |
| 2# | 95 |
| 3# | 93 |
| 5# | 90 |
| Masseauftrag 130 g/m$^2$ | |

Die Werte wurden jeweils nach 1 Woche Lagerung ermittelt. Weiterhin verdeutlicht der starke Rückschrumpf aller orientierten Muster das Bestreben der Haftklebemasse, wieder in den ursprünglichen Zustand zurückzukehren. Durch die Elektronenstrahl-Vemetzung kann die Orientierung eingefroren werden. Die Muster 1#, 2#, 3# und 5# wurden in Tabelle 7 mit den dargestellten Elektronenstrahl-Dosen vernetzt, um dann nach 2-monatiger Lagerung wiederum den Rückschrumpf dieser Haftklebemassen zu ermitteln.

Tabelle 7

| Muster | Elektronenstrahl-Dosis [kGy] | Rückschrumpf [%] |
|---|---|---|
| 1# | 40 | 89 |
| 1# | 0 | -25 |
| 2# | 30 | 94 |
| 2# | 0 | -5 |
| 3# | 30 | 92 |
| 3# | 0 | 0 |
| 5# | 50 | 90 |
| 5# | 0 | -8 |
| Masseauftrag 130 g/m$^2$ | | |

Tabelle 7 belegt, daß durch die Elektronenstrahl-Vernetzung die Orientierung eingefroren werden und auch nach 2-monatiger Lagerung durch den Rückschrumpf für Produktanwendungen genutzt werden kann. Der Vergleich mit den jeweils unvemetzten Mustern verdeutlicht, daß die Haftklebemassen ohne Vernetzung relaxieren und somit der Rückschrumpf nicht mehr existent ist Hier ist im Gegenteil bei einigen Proben sogar eine geringfügige Ausdehnung der Proben während der Messung zu beobachten, welche auf die auf die aufgehängten Proben einwirkende Schwerkraft zurückzuführen ist.
Für Produktanwendungen läßt sich der Rückschrumpf noch durch Temperatureinwirkung beschleunigen. In Tabelle 8 wurde der Rückschrumpf der Muster in Abhängigkeit von der Temperatur und der Zeit gemessen.

Tabelle 8

| Muster | Zeit [h]/Temperatur [°C] | Rückschrumpf [%] |
|---|---|---|
| 1# | 2/40 | 72 |
| 1# | 2/60 | 78 |
| 2# | 3/40 | 76 |
| 2# | 3/60 | 81 |
| 3# | 2/40 | 70 |
| 3# | 3/60 | 82 |
| 5# | 2/40 | 73 |
| 5# | 2/60 | 80 |
| Masseauftrag 130 g/m$^2$ | | |

Durch die Temperaturbehandlung wird der Rückschrumpf wesentlich beschleunigt Die Muster erreichen bei einer Temperierung von 60 °C schon nach relativ kurzer Zeit (3 h) einen Rückschrumpf von über 80 % und damit nahezu einen Wert, der sonst erst bei Lagerung von mehreren Tagen erzielt wird. Dies kann bevorzugt bei spannungsfreien Verklebungen auf gewölbten Oberflächen genutzt werden.

Unter Berücksichtigung dieser Ergebnisse lassen sich neue Haftklebebandprodukte realisieren, die sich diese beschriebenen Effekt zunutze machen. Bei Verklebungen von Kabelbäumen im Motorraum treten z.T. sehr hohe Temperaturunterschiede auf. Daher werden bevorzugt Acrylathaftklebebänder für solche Anwendungen eingesetzt. Im Gegensatz zu einer handelsüblichen Acrylatklebemasse wird eine orientierte Klebemasse sich bei Erwärmung durch den beschriebenen und gemessenen Rückschrumpf zusammenziehen und somit einen festen Verbund aus den Kabeln und dem dämmenden Vlies bilden. Gegenüber den orientierten Naturkautschukklebemassen bleiben die Vorteile, wie z.B. höhere Temperaturbeständigkeit in einem großen Temperaturfenster sowie die bessere Alterungsbeständigkeit bestehen.

Weiterhin kann man sich den rückschrumpfenden Effekt bei Verklebungen von gewölbten Oberflächen zunutze machen. Durch Aufbringen eines Haftklebebandes auf eine gewölbte Oberfläche mit anschließender Erhitzung zieht sich das Haftklebeband zusammen und gleicht sich somit der Wölbung des Substrates an. Auf dieser Weise wird die Verklebung deutlich erleichtert und die Anzahl der Lufteinschlüsse zwischen Substrat und Klebeband deutlich verringert. Die Haftklebemasse kann die optimale Wirkung aufbringen. Dieser Effekt kann durch ein orientiertes Trägermaterial noch unterstützt werden. Nach der Applikation schrumpft unter Erhitzung sowohl das Trägermaterial und die orientierte Haftklebemasse, so daß die Verklebungen auf der Wölbung vollkommen spannungsfrei sind.

Die erfindungsgemäßen Haftklebemassen bieten ebenfalls einen weiten Bereich für Anwendungen, die Vorteile der geringen Dehnung in Längsrichtung sowie der Möglichkeit des Rückschrumpfes in einer vorteilhaften Weise ausnutzen.

Auch die Eigenschaft der Vordehnung der Haftklebemassen läßt sich hervorragend nutzen. Ein weiteres beispielhaftes Einsatzgebiet für solche hochorientierten Acrylathaftklebemassen sind stripbare doppelseitige Verklebungen. Im Gegensatz zu herkömmlichen Stripprodukten ist die orientierte Haftklebemasse bereits zu mehreren 100 %ten vorgedehnt, so daß zur Entfernung der doppelseitigen Verklebung die Arcylathaftklebemasse in Verstreckungsrichtung (MD) nur noch um wenige Prozent gedehnt werden muß. In besonders bevorzugter Weise werden diese Produkte als Acrylathotmelts mit einer Schichtdicke von mehreren 100 µm hergestellt. In besonders bevorzugter Weise werden Reinacrylate eingesetzt. Gegenüber herkömmlichen Systemen (Mehrschichtaufbauten, SIS-Klebemassen) sind die orientierten Acrylatstrips transparent, alterungsstabil und kostengünstig in der Fertigung.

## Patentansprüche

1. Haftklebemasse, erhältlich durch radikalische Polymerisation, **dadurch gekennzeichnet, daß**

   - die Haftklebemasse zu mindestens Gew.-65 % auf zumindest einem acrylischen Monomer aus der Gruppe der Verbindungen der folgenden allgemeinen Formel basiert:

   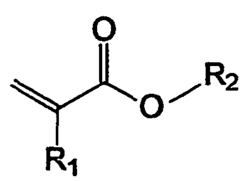

   wobei $R_1$ = H oder $CH_3$ ist und der Rest $R_2$ = H oder $CH_3$ ist oder gewählt wird aus der Gruppe der verzweigten oder unverzweigten, gesättigten Alkylgruppen mit 2 - 20 Kohlenstoffatomen.

   - das mittlere Molekulargewicht der Haftklebemasse mindestens 650.000 beträgt,
   - die auf einen Träger aufgetragene Haftklebemasse eine Vorzugsrichtung besitzt, wobei der in Vorzugsrichtung gemessene Brechungsindex $n_{MD}$ größer ist als der in einer Richtung senkrecht zur Vorzugsrichtung gemessene Brechungsindex $n_{CD}$, und wobei die Differenz $\Delta n = n_{MD} - n_{CD}$ mindestens $1 \cdot 10^{-5}$ beträgt.

2. Haftklebemasse nach Anspruch 1, **dadurch gekennzeichnet, daß** als acrylisches Monomer zumindest eines aus der Gruppe der Verbindungen der folgenden allgemeinen Formel

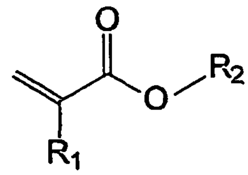

wobei $R_1$ = H oder $CH_3$ ist und der Rest $R_2$ gewählt wird aus der Gruppe der verzweigten oder unverzweigten, gesättigten Alkylgruppen mit 4 - 9 Kohlenstoffatomen eingesetzt wird.

**3.** Haftklebemasse nach einem der vorangehenden Ansprüche, **dadurch gekennzeichnet, daß** als Monomere Vinylverbindungen zu einem Anteil von bis zu 35 Gew.-% eingesetzt werden, insbesondere eine oder mehrere Vinylverbindungen gewählt aus der folgenden Gruppe:

Vinylester, Vinylhalogenide, Vinylidenhalogenide, Nitrile ethylenisch ungesättigter Kohlenwassserstoffe.

**4.** Haftklebemasse nach einem der vorangehenden Ansprüche, **dadurch gekennzeichnet, daß** Harze oder andere Additive, wie Alterungsschutzmittel, Lichtschutzmittel, Ozonschutzmittel, Fettsäuren, Weichmacher, Keimbildner, Blähmittel, Beschleuniger und/oder Füllmittel zugesetzt sind.

**5.** Haftklebemasse nach einem der oberen Ansprüche, **dadurch gekennzeichnet, daß** für die Vernetzung der Polyacrylatmasse Vemetzer zugesetzt sind, insbesondere bi-oder multifunktionelle Acrylate und/oder Methacrylate, bi- oder multifunktionelle Isocyanate oder bi- oder multifunktionelle Epoxide.

**6.** Verfahren zur Herstellung orientierter Acrylathaftklebemassen, **gekennzeichnet durch** die folgenden Schritte:

- Polymerisation eines Gemisches enthaltend zumindest ein Monomer auf Vinyl-, Acryl- oder Methacrylbasis oder eine Kombination dieser Monomere, wobei das mittlere Molekulargewicht der entstehenden Polymere oberhalb von 650.000 liegt,

**o** anschließender Extrusionsbeschichtung der Polymermasse,
**o** anschließender Vernetzung der Polymermasse auf dem Träger **durch** Bestrahlung mit Elektronenstrahlen

**7.** Klebeband mit einer ein- oder beidseitig auf einem Träger aufgetragenen Acrylathaftklebemasse nach einem der vorangehenden Ansprüche.

## Claims

**1.** Pressure-sensitive adhesive obtainable by free-radical polymerization, **characterized in that**

- at least 65% by weight of the adhesive is based on at least one acrylic monomer from the group of the compounds of the following general formula:

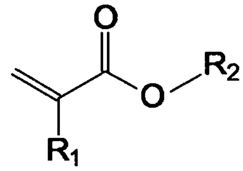

where $R_1$ = H or $CH_3$ and the radical $R_2$ = H or $CH_3$ or is selected from the group consisting of branched or unbranched saturated alkyl groups having 2-20 carbon atoms,

- the average molecular weight of the adhesive is at least 650,000,

- applied to a carrier, the adhesive possesses a preferential direction, where the refractive index measured in the preferential direction $n_{MD}$ is greater than the refractive index measured in a direction perpendicular to the preferential direction $n_{CD}$, the difference $\Delta n = n_{MD} - n_{CD}$ being at least $1 \cdot 10^{-5}$.

**2.** Adhesive according to Claim 1, **characterized in that** the acrylic monomer used is at least one from the group of the compounds of the following general formula

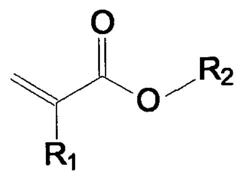

where $R_1$ = H or $CH_3$ and the radical $R_2$ is chosen from the group of branched or unbranched saturated alkyl groups having 4 - 9 carbon atoms.

**3.** Adhesive according to any of the preceding claims, **characterized in that** the monomers used include vinyl compounds in a fraction of up to 35% by weight, in particular one or more vinyl compounds chosen from the following group:

vinyl esters, vinyl halides, vinylidene halides, nitriles of ethylenically unsaturated hydrocarbons.

**4.** Adhesive according to any one of the preceding daims, **characterized in that** resins or other additives, such as ageing inhibitors, light stabilizers, ozone protectants, fatty acids, plasticizers, nucleators, blowing agents, accelerators and/or fillers have been added.

**5.** Adhesive according to any of the above claims, **characterized in that** crosslinkers have been added for the crosslinking of the polyacrylate composition, especially difunctional or polyfunctional acrylates and/or methacrylates, difunctional or polyfunctional isocyanates or difunctional or polyfunctional epoxides.

**6.** Process for preparing oriented acrylic pressure-sensitive adhesives, **characterized by** the following steps:

- polymerizing a mixture comprising at least one vinyl-, acrylic- or methacrylic-based monomer or a combination of these monomers, the average molecular weight of the resulting polymers being more than 650,000,
- subsequently extrusion coating the polymer composition,
- subsequently crosslinking the polymer composition on the carrier by irradiation with electron beams.

**7.** Adhesive tape comprising an acrylic pressure-sensitive adhesive according to any of the preceding claims, applied to one or both sides of the carrier.

## Revendications

**1.** Masse autoadhésive que l'on peut obtenir par polymérisation radicalaire, **caractérisée en ce que**

- la masse autoadhésive est, à raison d'au moins 65% en poids, à base d'au moins un monomère acrylique du groupe des composés de la formule générale suivante :

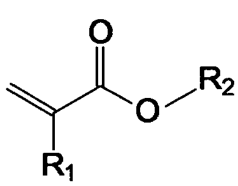

dans laquelle $R_1$ = H ou $CH_3$ et le radical $R_2$ = H ou $CH_3$ ou est choisi dans le groupe des groupements alkyle saturés, ramifiés ou non ramifiés, comportant de 2 à 20 atomes de carbone,

- le poids moléculaire moyen de la masse autoadhésive est d'au moins 650.000,
- la masse autoadhésive appliquée sur un support possède une direction préférentielle, l'indice de réfraction $\eta_{MD}$ mesuré dans la direction préférentielle étant supérieur à l'indice de réfraction $\eta_{CD}$ mesuré dans une direction perpendiculaire à la direction préférentielle, et le différence $\Delta\eta = \eta_{MD} - \eta_{CD}$ étant d'au moins $1.10^{-5}$.

**2.** Masse autoadhésive selon la revendication 1, **caractérisée en ce que** l'on met en oeuvre en tant que monomère acrylique au moins l'un du groupe des composés de la formule générale suivante

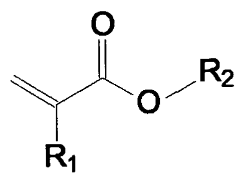

dans laquelle $R_1$ = H ou $CH_3$ et le radical $R_2$ est choisi dans le groupe des groupements alkyle saturés, ramifiés ou non ramifiés, comportant de 4 à 9 atomes de carbone.

**3.** Masse autoadhésive selon l'une quelconque des revendications qui précèdent, **caractérisée en ce que** on met en oeuvre en tant que monomères des composés vinyliques en une fraction allant jusqu'à 35% en poids, en particulier un ou plusieurs composés choisis dans les groupes suivants :

esters vinyliques, halogénures de vinyle, halogénures de vinylidène, nitriles d'hydrocarbures éthyléniquement insaturés.

**4.** Masse autoadhésive selon l'une quelconque des revendications qui précèdent, **caractérisée en ce que** l'on ajoute des résines ou d'autres additifs, tels que des agents de protection contre le vieillissement, des agents de protection contre la lumière, des agents de protection contre l'ozone, des acides gras, des plastifiants, des agents de formation de germes cristallins, des agents porogènes, des accélérateurs et/ou des matières de remplissage.

**5.** Masse autoadhésive selon l'une quelconque des revendications qui précèdent, **caractérisée en ce que**, pour la réticulation de la masse de polyacrylate, on ajoute des réticulants, en particulier des acrylates et/ou des méthacrylates bi- ou multifonctionnels, des isocyanates bi- ou multifonctionnels ou des époxydes bi- ou multifonctionnels.

**6.** Procédé de préparation de masses autoadhésives acryliques orientées, **caractérisé par** les étapes suivantes :

- polymérisation d'un mélange contenant au moins un monomère à base de vinyle, d'acryle ou de méthacryle ou une combinaison de ces monomères, le poids moléculaire moyen des polymères formés étant de plus de 650.000,
- couchage subséquent par extrusion de la masse de polymère,
- réticulation subséquente de la masse de polymère sur le support par irradiation par faisceau électronique.

**7.** Bande adhésive comportant une masse autoadhésive acrylique selon l'une quelconque des revendications qui précèdent, appliquée d'un côté ou des deux côtés sur un support.